(19) Europäisches Patentamt
European Patent Office
Office européen des brevets

(11) **EP 3 544 867 B1**

(12) # EUROPÄISCHE PATENTSCHRIFT

(45) Veröffentlichungstag und Bekanntmachung des Hinweises auf die Patenterteilung:
**17.06.2020 Patentblatt 2020/25**

(21) Anmeldenummer: **17800527.8**

(22) Anmeldetag: **17.11.2017**

(51) Int Cl.:
**B60S 3/04** *(2006.01)*

(86) Internationale Anmeldenummer:
**PCT/EP2017/079536**

(87) Internationale Veröffentlichungsnummer:
**WO 2018/095808 (31.05.2018 Gazette 2018/22)**

(54) **VERFAHREN ZUM BETRIEB EINER FAHRZEUGWASCHANLAGE UND FAHRZEUGWASCHANLAGE**

METHOD FOR OPERATING A VEHICLE WASHING SYSTEM, AND VEHICLE WASHING SYSTEM

PROCÉDÉ PERMETTANT DE FAIRE FONCTIONNER UNE INSTALLATION DE LAVAGE DE VÉHICULES ET INSTALLATION DE LAVAGE DE VÉHICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2016 DE 102016122802**

(43) Veröffentlichungstag der Anmeldung:
**02.10.2019 Patentblatt 2019/40**

(73) Patentinhaber: **WashTec Holding GmbH
86153 Augsburg (DE)**

(72) Erfinder: **DIETSCH, Wolfgang
60435 Frankfurt (DE)**

(74) Vertreter: **Reitstötter Kinzebach
Patentanwälte
Sternwartstrasse 4
81679 München (DE)**

(56) Entgegenhaltungen:
**EP-A2- 1 795 409          EP-B1- 0 947 405
WO-A1-2013/064574      DE-C2- 3 811 196**

EP 3 544 867 B1

**Beschreibung**

Die vorliegende Erfindung betrifft ein Verfahren zum Betrieb einer Fahrzeugwaschanlage zur Behandlung der Räder des Fahrzeugs. Bei dem Verfahren wird ein Fahrzeug in Längsrichtung mittels einer Sensoreinrichtung gescannt, wobei Messdaten erfasst werden und anhand einer Auswertung der Messdaten Positionsdaten für die Positionen von Rädern des Fahrzeugs ermittelt werden. Ferner betrifft die Erfindung eine Fahrzeugwaschanlage mit einer Behandlungseinheit für Räder eines Fahrzeugs, einer Sensoreinrichtung zum Scannen des Fahrzeugs in Längsrichtung, wobei beim Scannen Messdaten erfassbar sind, und einer Positionsbestimmungseinrichtung, die mit der Sensoreinrichtung gekoppelt ist und mit der anhand einer Auswertung der Messdaten Positionsdaten für die Positionen von den Rädern des Fahrzeugs ermittelbar sind.

Bei einer Fahrzeugwaschanlage, mit welcher die Räder eines Fahrzeugs behandelt, insbesondere gereinigt werden sollen, ist es erforderlich, die Position der Räder zu ermitteln, um eine Behandlungseinheit zum Reinigen der Räder zu steuern.

Die DE 38 111 96 C2 beschreibt eine Vorrichtung zum Waschen der Räder von Fahrzeugen in einer Waschstraße, bei der die Position eines Rades des Fahrzeugs mittels einer Lichtschranke ermittelt wird. Die Räder eines sich in der Waschstraße bewegenden Fahrzeugs unterbrechen die Lichtschranke. Sobald die weiterrollenden Vorderräder des Fahrzeugs den Lichtstrahl der Lichtschranke wieder freigeben, schaltet eine Nachlaufsteuerung Antriebsmotoren für einen Schlitten ein, an dem Waschbürsten für die Räder gelagert sind.

Aus der EP 0 947 405 B1 ist eine Portalwaschanlage für Fahrzeuge bekannt, welche zwei eigenständig bewegliche Portale umfasst. Die Portalwaschanlage umfasst eine Tasteinrichtung zur Erfassung der Fahrzeugräder. Ferner weist zumindest eines der Portale eine Radwascheinrichtung auf. Bei der Tasteinrichtung handelt es sich beispielsweise um eine Lichtschranke mit einem Sender und einem gegenüberliegenden Empfänger.

Aus der EP 2 571 734 B1 ist eine Vorrichtung und ein Verfahren zum Aufbringen von Reinigungsflüssigkeit auf ein Rad eines Fahrzeugs in einer Fahrzeugwaschanlage bekannt, bei denen eine Lichtschranke zur Bestimmung des Beginns und des Endes eines Rades vorgesehen ist.

Ferner ist aus der DE 20 205 050 U1 eine Vorrichtung zur Detektion der Position eines Radfahrzeugs während der Einfahrt in eine Fahrzeugbehandlungsanlage bekannt. Bei dieser Vorrichtung ist in Bodennähe mindestens eine elektrische Schalteinrichtung angeordnet, die beim Überfahren durch mindestens ein Rad des Fahrzeugs betätigt wird. Mittels einer Auswerteeinheit wird aus der Betätigung der Schalteinrichtung die momentane Position des Rades und damit des Fahrzeugs ermittelt.

Aus der WO 2013/064574 A1 ist eine weitere Waschanlage für die Räder des Fahrzeugs bekannt.

Schließlich ist aus der EP 1 795 409 A2 eine Autowaschanlage für Fahrzeuge bekannt, bei welcher eine Scaneinrichtung zum dreidimensionalen Abtasten und Erfassen der Fahrzeugoberfläche an einem Portal angeordnet ist.

Bei herkömmlichen Fahrzeugwaschanlagen hat sich das Problem ergeben, dass insbesondere bei tiefer gelegten Fahrzeugen oder bei herunterhängenden Fahrzeugteilen die Ermittlung der Position der Räder des Fahrzeugs fehleranfällig ist. Eine fehlerhafte Positionsbestimmung der Räder kann dazu führen, dass die Behandlung, insbesondere die Reinigung des Fahrzeugs, beeinträchtigt wird. Außerdem können in einem solchen Fall Schäden am Fahrzeuglack entstehen.

Der vorliegenden Erfindung liegt daher die Aufgabe zugrunde, ein Verfahren und eine Fahrzeugwaschanlage der eingangs genannten Art bereitzustellen, bei denen einerseits die gewünschte Behandlung der Räder des Fahrzeugs zufriedenstellend durchgeführt werden kann, andererseits jedoch die Gefahr einer Beschädigung des Fahrzeugs verringert ist.

Erfindungsgemäß wird diese Aufgabe durch ein Verfahren mit den Merkmalen des Anspruchs 1 und eine Fahrzeugwaschanlage mit den Merkmalen des Anspruchs 10 gelöst. Vorteilhafte Ausgestaltungen und Weiterbildungen ergeben sich aus den abhängigen Ansprüchen.

Bei dem erfindungsgemäßen Verfahren wird demgemäß ein Fahrzeug in Längsrichtung mittels einer Sensoreinrichtung gescannt, wobei Messdaten erfasst werden. Anhand einer Auswertung der Messdaten werden Positionsdaten für die Positionen von Rädern des Fahrzeugs ermittelt. Die ermittelten Positionsdaten der Positionen der Räder des Fahrzeugs werden einer Konfidenzprüfung unterzogen, wobei ein Konfidenzmaß ermittelt wird. Wenn das ermittelte Konfidenzmaß größer oder gleich einem Konfidenzgrenzwert ist, wird eine Behandlung der Räder des Fahrzeugs in einem ersten Modus bei den den Positionsdaten zugeordneten Positionen durchgeführt. Wenn hingegen das ermittelte Konfidenzmaß kleiner als der Konfidenzgrenzwert ist, wird eine Behandlung der Räder des Fahrzeugs nicht oder in einem zweiten Modus bei den den Positionsdaten zugeordneten Positionen durchgeführt.

Die Positionsdaten für die Positionen der Räder des Fahrzeugs können beispielsweise die Position des Mittelpunkts eines Rades in Längsrichtung des Fahrzeugs und den Durchmesser des Rades umfassen.

Bei der Auswertung von Messdaten der Sensoreinrichtung lässt sich aufgrund der üblichen Anordnung von Fahrzeugrädern bei einem Fahrzeug unter Berücksichtigung bestimmter Annahmen und Modelle die Position der Räder des Fahrzeugs ermitteln. Bei dieser Ermittlung können sich jedoch Fehler ergeben. Solche Fehler können beispielsweise durch tief angebaute Fahrzeugteile oder herabhängende Fahrzeugteile verursacht werden. Erfindungsgemäß wird daher bei der Konfidenzprüfung die Güte der Ermittlung der Positionsdaten für die Positionen der Räder des Fahrzeugs berücksichtigt. Ein Maß für die Güte der Ermittlung der korrekten Positionsdaten für die Positionen der Räder ist das Konfidenzmaß, welches auch als Vertrauensmaß bezeichnet wird.

Das Konfidenzmaß gibt für eine ermittelte Position eines Rades an, wie wahrscheinlich es ist, dass diese ermittelte Position die korrekte Position des Rades ist. Bei der Ermittlung des Konfidenzmaßes werden insbesondere die gesamten Messdaten, die von der Sensoreinrichtung erzeugt wurden, berücksichtigt. Auf Basis des Konfidenzmaßes wird bei dem erfindungsgemäßen Verfahren entschieden, ob die Position korrekt oder inkorrekt erkannt worden ist. Das Konfidenzmaß ist daher ein Klassifikator, welcher einer ermittelten Position eine der Klassen korrekt oder inkorrekt zuordnet. Die Klassifikation erfolgt dabei anhand des Konfidenzgrenzwerts. Auf diese Weise wird ein Konfidenzintervall bzw. ein Vertrauensintervall gebildet. Befindet sich das ermittelte Konfidenzmaß außerhalb des Konfidenzintervalls, d. h. unterhalb des Konfidenzgrenzwerts, geht das erfindungsgemäße Verfahren davon aus, dass die Position des Rades nicht korrekt erkannt worden ist. In diesem Fall wird die Behandlung der Räder des Fahrzeugs nicht durchgeführt oder in einem zweiten Modus durchgeführt. In diesem zweiten Modus kann insbesondere sicher verhindert werden, dass das Fahrzeug beschädigt wird, selbst wenn die Position eines Rades des Fahrzeugs inkorrekt ermittelt worden ist und auf Basis dieser inkorrekten Positionsdaten für die Position des Rades eine Behandlung durchgeführt wird.

Das erfindungsgemäße Verfahren gewährleistet somit die gewünschte Behandlung der Räder des Fahrzeugs, wenn die Positionen der Räder des Fahrzeugs mit hoher Wahrscheinlichkeit korrekt bestimmt worden sind. Gleichzeitig wird jedoch sichergestellt, dass das Fahrzeug nicht beschädigt wird, wenn mit hoher Wahrscheinlichkeit die Position eines Rades des Fahrzeugs inkorrekt bestimmt worden ist.

Gemäß einer Ausgestaltung des erfindungsgemäßen Verfahrens wird das Fahrzeug über eine hinreichende Länge mittels der Sensoreinrichtung in Längserstreckung gescannt, bevor eine Behandlung der Räder des Fahrzeugs begonnen wird. Beispielsweise kann das Fahrzeug über eine Längserstreckung von zumindest 1700 mm, insbesondere von zumindest 2300 mm, gescannt werden, bevor eine Behandlung der Räder des Fahrzeugs begonnen wird.

Gemäß einer Ausgestaltung des erfindungsgemäßen Verfahrens wird das Fahrzeug im Wesentlichen in seiner gesamten Längserstreckung, insbesondere in seiner gesamten Längserstreckung, mittels der Sensoreinrichtung gescannt, bevor eine Behandlung der Räder des Fahrzeugs begonnen wird. Im Wesentlichen bedeutet in diesem Fall, dass das Scannen in Längserstreckung des Fahrzeugs auch über einen etwas kürzeren Bereich als die gesamte Längserstreckung des Fahrzeugs erfolgen kann. Beispielsweise kann das Scannen über eine maximal für die Fahrzeugwaschanlage zugelassene Länge abzüglich eines Radradius vorne und eines Radradius hinten erfolgen. Hierbei wird berücksichtigt, dass das Fahrzeug vorn und hinten immer etwas über das Rad übersteht.

Das Scannen der Sensoreinrichtung erfolgt insbesondere optisch. Beispielsweise kann ein Portal der Fahrzeugwaschanlage zum Scannen des Fahrzeugs in Längsrichtung des Fahrzeugs bewegt werden. Alternativ fährt bei einer Waschstraße das Fahrzeug in Längsrichtung an der Sensoreinrichtung vorbei. Durch das vollständige Scannen des Fahrzeugs in Längsrichtung, bevor die Behandlung der Räder des Fahrzeugs begonnen wird, können Messdaten erfasst werden, mit denen sich genauer bestimmen lässt, wie das Konfidenzmaß der Positionsdaten der Positionen der Räder des Fahrzeugs sind. Die Güte der Positionsbestimmung lässt sich somit verbessern. Auf diese Weise kann genauer bestimmt werden, ob eine Position eines Rades korrekt oder inkorrekt bestimmt worden ist.

Als Ergebnis der Konfidenzprüfung ist das ermittelte Konfidenzmaß insbesondere kleiner, wenn bei der Auswertung der Messdaten ermittelt wurde, dass das Fahrzeug mehr als zwei Achsen aufweist. Alternativ oder zusätzlich ist das ermittelte Konfidenzmaß insbesondere kleiner, wenn bei der Auswertung der Messdaten ermittelt wurde, dass das Fahrzeug mehr als zwei Räder auf einer Fahrzeugseite aufweist. Die Räder bzw. Achsen können beispielsweise dadurch erfasst werden, dass sich das Signal der Sensoreinrichtung in einem bestimmten Bereich ändert. Zum Beispiel kann eine Lichtschranke in dem Bereich unterbrochen sein und innerhalb dieses Bereichs allenfalls nur in einem sehr kleinen Abschnitt ein Signal erzeugen. Das ermittelte Konfidenzmaß ist insbesondere kleiner als der Konfidenzgrenzwert, wenn ermittelt wurde, dass das Fahrzeug mehr als zwei Achsen oder mehr als zwei Räder auf einer Fahrzeugseite aufweist.

Durch das Scannen des Fahrzeugs in Längsrichtung kann die Anzahl der Achsen und/oder der Räder des Fahrzeugs besonders sicher und einfach bestimmt werden. Wenn in einer Fahrzeugwaschanlage, welche für Fahrzeuge mit zwei Achsen zugelassen ist, ermittelt wurde, dass das Fahrzeug mehr als zwei Achsen oder mehr als zwei Räder auf einer Fahrzeugseite aufweist, ist die Auswertung der Messdaten mit hoher Wahrscheinlichkeit fehlerhaft. Bei dem erfindungsgemäßen Verfahren wird in einem solchen Fall das ermittelte Konfidenzmaß verringert. Wenn in diesem Fall nicht andere Messdaten die ermittelten Positionsdaten für die Räder des Fahrzeugs mit hoher Wahrscheinlichkeit verifizieren, fällt in diesem Fall das Konfidenzmaß unter den Konfidenzgrenzwert, so dass von einer inkorrekten Positionsbestimmung der Räder ausgegangen wird.

Gemäß einer Ausgestaltung des erfindungsgemäßen Verfahrens ist das ermittelte Konfidenzmaß größer oder gleich dem Konfidenzgrenzwert, wenn anhand der Auswertung der Messdaten Positionsdaten für die Positionen von zwei Rädern ermittelt wurden, nach denen die Mittelpunkte der Räder einen Abstand von mehr als 1700 mm besitzen und die ermittelte horizontale Sehne jeden Rades in einer Höhe von 80 mm in einem Bereich von 400 mm bis 600 mm liegt. In diesem Fall wird das Fahrzeug in Längsrichtung insbesondere optisch, zum Beispiel durch eine Lichtschranke, gescannt. Auf diese Weise kann die Sehnenlänge eines Rades erfasst werden. Für die Länge der Sehne s gilt in diesem Fall:

$$s = \sqrt{8rh - 4h^2}$$

wobei *r* der Radius des Rades und *h* die Höhe der Lichtschranke ist. Wenn die Höhe 80 mm ist, ergibt sich somit eine Sehnenlänge von 480 mm bei einem Radius des Rades von 40 cm bzw. eine Sehnenlänge von 408 mm bei einem Radius des Rades von 30 cm, so dass der vorstehend angegebene Bereich der Sehnenlänge mit großer Wahrscheinlichkeit einem Rad zugeordnet werden kann. Wenn mittels der Lichtschranken in einer anderen Höhe gemessen wird, ist die Sehnenlänge und damit der Bereich für die Sehnenlänge entsprechend anzupassen.

Alternativ kann auch der freie Abstand zwischen zwei Rädern betrachtet werden. Wenn dieser freie Abstand größer als 1400 mm ist und die ermittelte horizontale Sehne jeden Rades in einer Höhe von 80 mm in einem Bereich von 400 mm bis 600 mm liegt, ist das ermittelte Konfidenzmaß größer oder gleich dem Konfidenzgrenzwert.

In den vorstehend genannten Fällen werden auch noch Fahrzeuge mit einem sehr kurzem Radstand von etwa 1900 mm korrekt erfasst.

Gemäß einer Ausgestaltung des erfindungsgemäßen Verfahrens sind für ein Referenzfahrzeug Sollbereiche für geometrische Parameter für Positionen eines vorderen Referenzrades und eines hinteren Referenzrades relativ zu der Karosserie des Referenzfahrzeugs definiert. Anhand einer Auswertung der Messdaten werden diese geometrischen Parameter für das Fahrzeug ermittelt und es wird bestimmt, ob die ermittelten geometrischen Parameter innerhalb der definierten Sollbereiche liegen. Wenn die ermittelten geometrischen Parameter außerhalb der definierten Sollbereiche liegen, ist das Konfidenzmaß bei dem erfindungsgemäßen Verfahren kleiner.

Beispielsweise kann für ein Referenzfahrzeug ein erstes Verhältnis des Abstands des vorderen Abschlusses von der Position eines vorderen Referenzrades zu dem Abstand des vorderen Abschlusses von dem hinteren Abschluss definiert sein. Alternativ oder zusätzlich kann ein zweites Verhältnis des Abstands des hinteren Abschlusses von der Position des hinteren Referenzrades zu dem Abstand des vorderen Abschlusses von dem hinteren Abschluss definiert sein. Alternativ oder zusätzlich kann ein drittes Verhältnis des Abstands des vorderen Abschlusses von der Position des vorderen Referenzrades zu dem Abstand der Position des vorderen Referenzrades von der Position des hinteren Referenzrades definiert sein. Alternativ oder zusätzlich kann ein fünftes Verhältnis des Abstands der Position des vorderen Referenzrades von der Position des hinteren Referenzrades zu dem Abstand des vorderen Abschlusses von dem hinteren Abschluss definiert sein. Für eines oder mehrere dieser Verhältnisse wird ein Sollbereich bzw. werden mehrere Sollbereiche definiert. Für das Fahrzeug, welches in Längsrichtung mittels der Sensoreinrichtung gescannt worden ist, wird nun eines dieser Verhältnisse oder mehrere dieser Verhältnisse ermittelt und geprüft, ob die ermittelten Verhältnisse innerhalb des jeweiligen Sollbereichs oder innerhalb der jeweiligen Sollbereiche liegen. Ist dies nicht der Fall, wird das Konfidenzmaß bei dem erfindungsgemäßen Verfahren verringert.

Bei dem erfindungsgemäßen Verfahren werden bei der Behandlung der Räder in dem ersten Modus die Räder insbesondere mittels Bürsten mechanisch gereinigt. Vor dieser mechanischen Reinigung können sie mit einer Reinigungsflüssigkeit besprüht werden. Eine solche Radreinigung ist an sich bekannt.

Gemäß einer Ausgestaltung des erfindungsgemäßen Verfahrens werden bei der Behandlung der Räder in dem zweiten Modus die Räder berührungslos gereinigt. Unter einer berührungslosen Reinigung wird dabei verstanden, dass keine festen Waschelemente, wie beispielsweise Bürsten oder Lappen mit den Rädern in Berührung kommen. Flüssigkeiten können jedoch mit den Rädern in Berührung kommen. Beispielsweise wird ein Hochdruckstrahl mit Waschflüssigkeit bei der berührungslosen Reinigung auf die Räder gerichtet. Bei der Behandlung der Räder in dem zweiten Modus wurde vorab ermittelt, dass das Konfidenzmaß für die Bestimmung der Position der Räder gering ist. Es liegt in diesem Fall somit eine erhöhte Wahrscheinlichkeit dafür vor, dass die Positionen inkorrekt bestimmt worden sind. Bei der berührungslosen Reinigung besteht nicht die Gefahr, dass andere Fahrzeugteile beschädigt werden oder das Reinigungsergebnis der übrigen Fahrzeugteile, insbesondere der Fahrzeugkarosserie, unbefriedigend ist, und zwar aufgrund von Waschflüssigkeit, die für die Räder bestimmt ist, jedoch bei falschen Positionen aufgebracht wurde,.

Bei der Fahrzeugwaschanlage kann es sich um eine Portalwaschanlage oder eine Waschstraße handeln. Im ersten Fall kann zum Beispiel zum Reinigen des Fahrzeugs ein Portal in einem ersten Hinlauf das ruhende Fahrzeug in Längsrichtung mittels der Sensoreinrichtung scannen und ein Reinigungsschaum auf eine Karosserie des Fahrzeugs aufgebracht werden, in einem ersten Rücklauf in dem ersten Modus eine Reinigungsflüssigkeit bei den ermittelten Positionen auf die Räder aufgebracht werden und in einem zweiten Hinlauf eine Hochdruckreinigung der Karosserie und eine mechanische Reinigung der Räder durchgeführt werden. Alternativ kann zum Reinigen des Fahrzeugs das Portal in dem ersten Hinlauf nur das ruhende Fahrzeug in Längsrichtung mittels der Sensoreinrichtung scannen, ohne dass der Reinigungsschaum auf eine Karosserie des Fahrzeugs aufgebracht wird. Im zweiten Fall kann zum Beispiel das Fahrzeug in der Waschstraße zunächst vollständig an der Sensoreinrichtung vorbeigeführt werden, bevor die Behandlung der Räder begonnen wird.

Bei einer Weiterbildung des erfindungsgemäßen Verfahrens wird mittels einer Anzeigevorrichtung ausgegeben, ob die Behandlung der Räder im ersten oder im zweiten Modus erfolgt. Es wird insbesondere angezeigt, wenn die Behandlung der Räder des Fahrzeugs zur Sicherheit deaktiviert wurde oder wenn eine Radwäsche zur Sicherheit ohne mechanisch einwirkende Bürsten erfolgt.

Die erfindungsgemäße Fahrzeugwaschanlage umfasst eine Behandlungseinheit für Räder eines Fahrzeugs, eine Sensoreinrichtung zum Scannen des Fahrzeugs in Längsrichtung, wobei beim Scannen Messdaten erfassbar sind, und eine Positionsbestimmungseinrichtung, die mit der Sensoreinrichtung gekoppelt ist und mit der anhand einer Auswertung der Messdaten Positionsdaten für die Positionen von den Rädern des Fahrzeugs ermittelbar sind. Die erfindungsgemäße Fahrzeugwaschanlage ist gekennzeichnet durch eine mit der Positionsbestimmungseinrichtung gekoppelten Prüfeinrichtung, mit der eine Konfidenzprüfung für die ermittelten Positionsdaten der Positionen der Räder des Fahrzeugs durchführbar ist, wobei ein Konfidenzmaß ermittelbar ist. Ferner ist die erfindungsgemäße Fahrzeugwaschanlage gekennzeichnet durch eine mit der Behandlungseinheit gekoppelten Steuereinrichtung, mit welcher die Behandlungseinheit so ansteuerbar ist, dass eine Behandlung der Räder des Fahrzeugs bei den den Positionsdaten zugeordneten Positionen in einem ersten Modus durchgeführt wird, wenn das ermittelte Konfidenzmaß größer oder gleich einem Konfidenzgrenzwert ist, und eine Behandlung der Räder des Fahrzeugs nicht oder in einem zweiten Modus bei den den Positionsdaten zugeordneten Positionen durchgeführt wird, wenn das ermittelte Konfidenzmaß kleiner als der Konfidenzgrenzwert ist.

Die erfindungsgemäße Fahrzeugwaschanlage ist insbesondere zur Durchführung des vorstehend erläuterten Verfahrens geeignet. Es weist somit auch dieselben Vorteile wie dieses Verfahren auf.

Die Fahrzeugwaschanlage umfasst als Sensoreinrichtung insbesondere zumindest eine Lichtschranke. Alternativ oder zusätzlich kann die Sensoreinrichtung eine Kamera, einen Ultraschallsensor, einen induktiven und/oder kapazitiven Sensor und/oder einen mechanischen Sensor umfassen.

Bei der Fahrzeugwaschanlage kann es sich z. B. um eine Portalwaschanlage mit einem Portal oder mit zwei Portalen (Doppelportalanlage) oder eine Waschstraße handeln.

Die Erfindung wird nun anhand eines Ausführungsbeispiels mit Bezug zu den beigefügten Zeichnungen erläutert.

Figur 1    zeigt schematisch den Aufbau eines Ausführungsbeispiels der erfindungsgemäßen Fahrzeugwaschanlage in einer Seitenansicht und

Figur 2    zeigt den Aufbau des in Figur 1 gezeigten Ausführungsbeispiels in einer Ansicht von vorne.

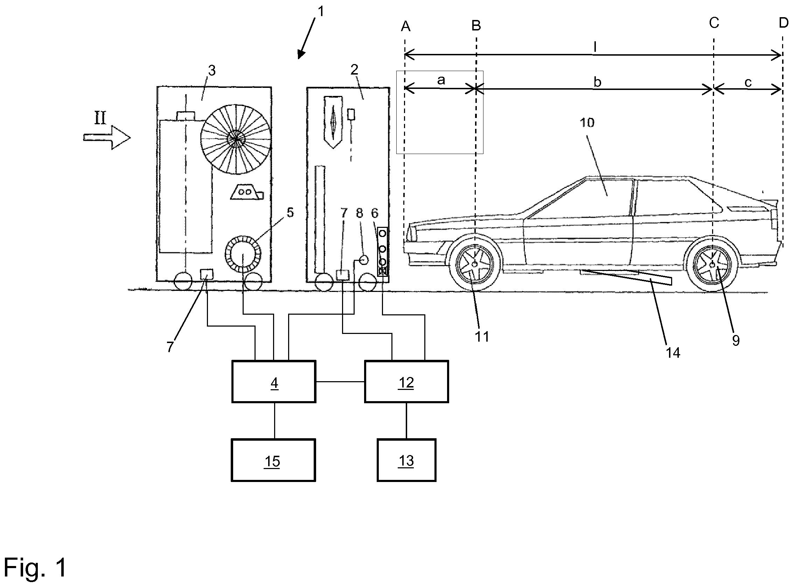

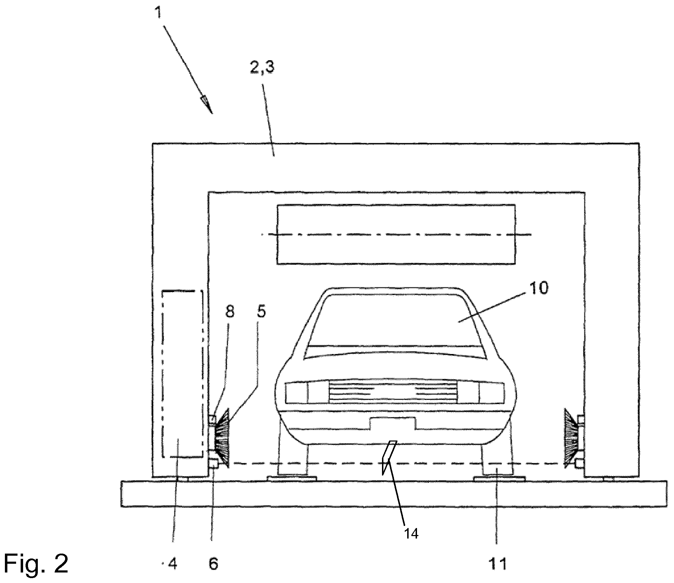

Mit Bezug zu den Figuren 1 und 2 wird zunächst ein Ausführungsbeispiel der erfindungsgemäßen Fahrzeugwaschanlage 1 beschrieben:
Die Fahrzeugwaschanlage 1 ist eine Portalwaschanlage, bei der die Portale 2, 3 relativ zu einem ortsfesten Fahrzeug 10 in Längsrichtung des Fahrzeugs 10 bewegt werden. Die Erfindung kann jedoch auf gleiche Weise in einer als Waschstraße ausgebildeten Fahrzeugwaschanlage eingesetzt werden, bei welcher sich das Fahrzeug in Längsrichtung relativ zu ortsfesten Behandlungseinheiten bewegt. Außerdem ist die Fahrzeugwaschanlage 1 des Ausführungsbeispiels eine Doppelportalanlage mit zwei eigenständig bewegbaren Portalen 2 und 3. Die Erfindung könnte jedoch auch in einer Portalwaschanlage mit nur einem Portal verwirklicht sein.

Das vordere Portal 2 umfasst eine Sensoreinrichtung 6, eine Wegerfassungseinrichtung 7 und eine Radbehandlungseinrichtung 8.

Im hier beschriebenen Ausführungsbeispiel umfasst die Sensoreinrichtung 6 mehrere in verschiedenen Höhen angeordnete Lichtschranken. Es wäre jedoch auch möglich, nur eine Lichtschranke in einer Höhe oberhalb der Führung für die Räder 9, 11 des Fahrzeugs 10, jedoch unterhalb der Fahrzeugkarosserie anzuordnen. Die Lichtschranke kann beispielsweise in 80 mm Höhe angeordnet sein. Jede Lichtschranke umfasst einen Lichtemitter an der einen Portalseite und einen Lichtdetektor an der in Querrichtung gegenüber liegenden Portalseite. Die Sensoreinrichtung 6 arbeitet somit berührungslos. Alternativ könnte sie auch als Reflexionslichtschranke oder als Ultraschallsensor, induktiver Sensor oder kapazitiver Sensor sowie auch als mechanische drehbeweglich gelagerte Schaltfahne ausgebildet sein.

Mit der Wegerfassungseinrichtung 7 wird die Position des vorderen Portals 2 relativ zum ortsfesten Boden und damit relativ zum Fahrzeug 10 erfasst. Die Wegerfassungseinrichtung 7 kann beispielsweise ein Drehgeber an den Portalrädern sein.

Bei der Radbehandlungseinrichtung 8 handelt es sich im hier beschriebenen Ausführungsbeispiel um einen Sprühkopf und/oder einen Schaumauftragekopf, die Waschflüssigkeit oder Schaum auf die Fahrzeugräder 9, 11, insbesondere auf die Radfelgen auftragen können. Derartige Radbehandlungseinrichtungen 8 sind an sich bekannt.

Das hintere Portal 3 umfasst auch eine Wegerfassungseinrichtung 7, die auf gleiche Weise wie die Wegerfassungseinrichtung 7 des vorderen Portals 2 die Position des hinteren Portals 3 relativ zum ortsfesten Boden und damit relativ zum Fahrzeug 10 erfasst. Des Weiteren weist das hintere Portal 3 eine Radwascheinrichtung 5 auf. Die Radwascheinrichtung 5 umfasst rotierbare Radwaschbürsten, mit denen insbesondere die Felgen der Fahrzeugräder 9 und 11 mechanisch gereinigt werden können. Die Radbehandlungseinrichtung 8 und die Radwascheinrichtung 5 bilden zusammen eine Behandlungseinheit für die Räder 11, 9 des Fahrzeugs 10.

Die Sensoreinrichtung 6 und die Wegerfassungseinrichtung 7 sind mit einer Positionsbestimmungseinrichtung 12 datentechnisch gekoppelt. Die Positionsbestimmungseinrichtung 12 erfasst zum einen die Messdaten der Wegerfassungseinrichtung 7 und ermittelt daraus fortwährend die aktuelle Position des vorderen Portals 2. Des Weiteren werden Messdaten der Sensoreinrichtung 6, d. h. die Messdaten der verschiedenen Lichtschranken der Sensoreinrichtung 6, an die Positionsbestimmungseinrichtung 12 übertragen. Diese Messdaten zeigen insbesondere an, ob zu einer bestimmten Position des vorderen Portals 2 relativ zum Fahrzeug 10 eine Lichtschranke der Sensoreinrichtung 6 unterbrochen war oder nicht. In vertikaler Richtung sind die Lichtschranken der Sensoreinrichtung 6 so angeordnet, dass die unterste Lichtschranke unterhalb der untersten Karosserieebene eines herkömmlichen, auch tiefer gelegten Fahrzeugs liegt, z. B. in 80 mm Höhe. Die oberste der Lichtschranken der Sensoreinrichtung 6 ist in vertikaler Richtung so angeordnet, dass sie oberhalb der unteren Grenze der Karosserie liegt, auch wenn es sich bei dem Fahrzeug um ein Fahrzeug mit sehr großem Bodenabstand handelt, wie beispielsweise einem Geländewagen. Wie es später mit Bezug zu dem erfindungsgemäßen Verfahren erläutert wird, kann die Positionsbestimmungseinrichtung 12 die Messdaten der Sensoreinrichtung 6 so auswerten, dass in Längsrichtung die Position des vorderen Abschlusses A, die Position B des vorderen Rades 11, die Position C des hinteren Rades 9 und die Position D des hinteren Abschlusses des Fahrzeugs 10 bestimmt werden kann.

Mit der Positionsbestimmungseinrichtung 12 ist eine Prüfeinrichtung 13 gekoppelt, mit der eine Konfidenzprüfung für die ermittelten Positionsdaten der Positionen der Räder 9 und 11 des Fahrzeugs 10 durchführbar ist, wobei ein Konfidenzmaß ermittelbar ist, wie es später mit Bezug zu dem erfindungsgemäßen Verfahren erläutert wird.

Die Prüfeinrichtung 13 umfasst ferner einen Speicher, in dem Sollbereiche für geometrische Parameter eines Referenzfahrzeugs gespeichert sind. Diese geometrischen Parameter definieren Positionen eines vorderen Referenzrades und eines hinteren Referenzrades relativ zu der Karosserie des Referenzfahrzeugs. Für ein Referenzfahrzeug ist insbesondere ein erstes Verhältnis des Abstands des vorderen Abschlusses von der Position eines vorderen Referenzrades zu dem Abstand des vorderen Abschlusses von dem hinteren Abschluss, ein zweites Verhältnis des Abstands des hinteren Abschlusses von der Position eines hinteren Referenzrades zu dem Abstand des vorderen Abschlusses von dem hinteren Abschluss, ein drittes Verhältnis des Abstands des vorderen Abschlusses von der Position des vorderen Referenzrades zu dem Abstand der vorderen Position des vorderen Referenzrades von der Position des hinteren Referenzrades, ein viertes Verhältnis des Abstands des hinteren Abschlusses von der Position des hinteren Referenzrades zu dem Abstand der Position des vorderen Referenzrades von der Position des hinteren Referenzrades und/oder ein fünftes Verhältnis des Abstands der Position des vorderen Referenzrades von der Position des hinteren Referenzrades zu dem Abstand des vorderen Abschlusses von dem hinteren Abschluss gespeichert. Für eines oder mehrere dieser Verhältnisse sind Sollbereiche in dem Speicher der Prüfeinrichtung 13 gespeichert.

Die Positionsbestimmungseinrichtung 12 ist mit einer Steuereinrichtung 4 gekoppelt, wobei die Positionsbestimmungseinrichtung die ermittelten Positionsdaten für das vordere Rad 11 und das hintere Rad 9 des Fahrzeugs 10 zusammen mit einem Konfidenzmaß für die Verlässlichkeit der ermittelten Positionsdaten an die Steuereinrichtung 4 überträgt.

Die Steuereinrichtung 4 ist mit der Radbehandlungseinrichtung 8 des vorderen Portals 2 und der Radwascheinrichtung 5 des hinteren Portals 3 gekoppelt. Die Steuereinrichtung 4 kann den Betrieb der Radbehandlungseinrichtung 8 steuern, so dass bei bestimmten Positionen in Längsrichtung des Fahrzeugs 10 Waschflüssigkeit oder Schaum abgegeben werden kann. Gleichermaßen steuert die Steuereinrichtung 6 die Radwascheinrichtung 5 so, dass bei bestimmten Positionen in Längsrichtung des Fahrzeugs 10 Bürsten der Radwascheinrichtung 5 in Querrichtung des hinteren Portals 3 auf ein Rad 9 oder 11 zubewegt wird und die Bürsten in Rotation versetzt werden, so dass ein Rad 9 oder 11 mechanisch gereinigt wird.

Zudem steuert die Steuereinrichtung 4 die Bewegung der Portale 2 und 3 in Längsrichtung des Fahrzeugs 10. Hierfür ist die Steuereinrichtung 4 mit Antriebsmotoren für die Räder der Portale 2 und 3 verbunden. Ferner werden die von den Wegerfassungseinrichtungen 7 der Portale 2 und 3 erfassten Daten an die Steuereinrichtung 4 direkt bzw. indirekt über die Positionsbestimmungseinrichtung 12 übertragen.

Schließlich ist die Steuereinrichtung 4 mit einer Anzeigevorrichtung 15 gekoppelt, welche dem Nutzer Informationen zum Betrieb der Fahrzeugwaschanlage 1 anzeigt.

Im Folgenden werden ein Ausführungsbeispiel des erfindungsgemäßen Verfahrens und weitere Details des Ausführungsbeispiels der erfindungsgemäßen Fahrzeugwaschanlage 1 erläutert:

Zunächst wird ein Fahrzeug 10 in die Fahrzeugwaschanlage 1 gefahren und dort wie in Figur 1 gezeigt abgestellt. Anschließend wird der Betrieb der Fahrzeugwaschanlage 1 zentral mittels der Steuereinrichtung 4 gesteuert. Zunächst wird das vordere Portal 2 in Längsrichtung des Fahrzeugs 10, d. h. in Richtung des Pfeils II, bewegt. Die Sensoreinrichtung 6 ist dabei eingeschaltet, d. h. die Lichtschranken der Sensoreinrichtung emittieren Lichtstrahlen und es wird erfasst, welcher Lichtstrahl bei welcher Position relativ zur Position des Fahrzeugs 10 unterbrochen wird. Die aktuelle Position des vorderen Portals 2 relativ zum Fahrzeug 10 wird dabei mittels der Wegerfassungseinrichtung 7 des vorderen Portals 2 zusammen mit den Signalen der Sensoreinrichtung 6 von der Positionsbestimmungseinrichtung 12 erfasst. Das Fahrzeug 10 wird in seiner gesamten Längserstreckung mittels der Sensoreinrichtung 6 gescannt, bevor eine Behandlung der Räder 9, 11 des Fahrzeugs 10 begonnen wird.

Die Messdaten werden anschließend mittels der Positionsbestimmungseinrichtung 12 ausgewertet. Als Ergebnis dieser Auswertung werden Positionsdaten für die Positionen der Räder 9 und 11 des Fahrzeugs 10 ermittelt. Beispielsweise können die Messdaten so ausgewertet werden, dass das Signal der untersten Lichtschranke oder der untersten beiden Lichtschranken der Sensoreinrichtung 6 betrachtet werden, welche unterhalb der unteren horizontalen Ebene der Karosserie des Fahrzeugs 10 liegen. Bei der Bewegung des vorderen Portals 2 entlang der Längsrichtung des Fahrzeugs 10 werden diese Lichtschranken von den Rädern 11 und 9 unterbrochen. Aus den Positionen, bei denen die Lichtschranke unterbrochen wird und anschließend wieder freigegeben wird, kann die Breite und der Mittelpunkt eines Rades bestimmt werden. Dabei kann berücksichtigt werden, dass die Lichtschranke gegebenenfalls kurzzeitig zwischendurch freigegeben wird, da bei relativ offenen Felgen die Lichtstrahlen der Lichtschranken durch Zwischenräume der Felgen durchtreten können.

In Figuren 1 und 2 ist außerdem der Fall gezeigt, bei dem ein Störelement 14 bei der Fahrzeugkarosserie herunterhängt. Dies kann beispielsweise ein herabhängender Auspuff sein. Bei herkömmlichen Verfahren zum Betrieb einer Fahrzeugwaschanlage 1, bei denen die Positionen der Räder 9 und 11 des Fahrzeugs 10 erfasst werden, führen solche Störelemente 14 zu einer Fehlfunktion, da das Störelement 14 eine Lichtschranke der Sensoreinrichtung 6 auf einem ähnlichen Abschnitt unterbrechen kann wie ein Rad.

Bei dem in den Figuren 1 und 2 gezeigten Fall wird das Fahrzeug 10 jedoch in seiner gesamten Längserstreckung zunächst gescannt, so dass zwar die Unterbrechungen der Lichtschranken der Sensoreinrichtungen 6, die von dem Störelement 14 verursachte werden, von der Positionsbestimmungseinrichtung 12 erfasst werden. Anschließend wird jedoch noch das hintere Rad 9 des Fahrzeugs 10 durch weitere Unterbrechungen der Lichtschranken der Sensoreinrichtungen 6 erfasst. Erst nachdem das Fahrzeug in seiner gesamten Längserstreckung gescannt worden ist, werden die Messdaten der Sensoreinrichtung 6 ausgewertet.

Die Messdaten werden dann von der Positionsbestimmungseinrichtung 12 an die Prüfeinrichtung 13 übertragen. Die Prüfeinrichtung 13 unterzieht die von der Positionsbestimmungseinrichtung 12 ermittelten Positionsdaten für die Positionen der Räder 11 und 9 des Fahrzeugs 10 einer Konfidenzprüfung. Bei dieser Konfidenzprüfung wird ein Konfidenzmaß ermittelt, welches die Verlässlichkeit der ermittelten Positionsdaten angibt.

Die Prüfeinrichtung 13 bestimmt anhand der Messdaten und der ermittelten Positionsdaten für die Räder 9 und 10 unter anderem, wie der Durchmesser der Räder 9 und 11 übereinstimmt. Bei einer sehr großen Übereinstimmung des Durchmessers oder der Breite der Räder 9 und 11 in einer bestimmten Höhe ordnet die Prüfeinrichtung 13 den ermittelten Positionsdaten ein hohes Konfidenzmaß zu, welches oberhalb eines Konfidenzgrenzwerts liegt. Wenn der Konfidenzwert nicht durch weitere Auswertungen herabgesetzt wird, folgt aus solch einem hohen Konfidenzwert, dass die Verlässlichkeit der ermittelten Positionsdaten für die Räder 9 und 11 sehr hoch ist, so dass eine Reinigung der Räder 9 und 11 bei diesen Positionsdaten im weiteren Betrieb der Fahrzeugwaschanlage 1 durchgeführt werden kann.

Wenn die Positionsbestimmungseinrichtung 12 hingegen wegen der Unterbrechung der Lichtschranken der Sensoreinrichtung 6 durch das Störelement 14 ermittelt hat, dass das Fahrzeug 10 drei Achsen und drei Räder auf jeder Fahrzeugseite hat, verringert die Prüfeinrichtung 13 das Konfidenzmaß so weit, dass es unter den Konfidenzgrenzwert fällt. Dies hat zur Folge, dass im weiteren Betrieb der Fahrzeugwaschanlage 1 davon ausgegangen wird, dass die Positionen der Räder 9 und 11 inkorrekt ermittelt worden sind.

Die Prüfeinrichtung 13 ermittelt aus den Messdaten der Sensoreinrichtung 6 ferner geometrische Parameter für das Fahrzeug 10, welche mit den in der Prüfeinrichtung 13 gespeicherten geometrischen Parametern für das Referenzfahrzeug verglichen werden können. Es kann insbesondere bestimmt werden, ob die ermittelten geometrischen Parameter innerhalb der definierten gespeicherten Sollbereiche für das Referenzfahrzeug liegen. Wenn die ermittelten geometrischen Parameter außerhalb einiger oder mehrerer definierter Sollbereiche liegen, führt dies zu gegebenenfalls unterschiedlich gewichteten Verringerungen des Konfidenzmaßes.

Beispielsweise werden mittels der weitere oberen Lichtschranken der Sensoreinrichtung 6 Positionsdaten für die Position A des vorderen Abschlusses und für die Position D des hinteren Abschlusses des Fahrzeugs 10 ermittelt. Aus den Positionsdaten für die Positionen B der Achse des vorderen Rades 11 und der Position C für die Achse des hinteren Rades 9 werden daraus der Abstand a der Position A des vorderen Abschlusses von der Position B der Achse des vorderen Rades 11 bestimmt. Ferner wird der Abstand c der Position C der Achse des hinteren Rades 9 von der Position D des hinteren Abschlusses des Fahrzeugs 10 bestimmt. Schließlich wird der Abstand b der Position B der Achse des vorderen Rades 11 von der Position C der Achse des hinteren Rades 9 bestimmt. Schließlich wird die Länge I des Fahrzeugs 10 bestimmt, d. h. der Abstand der Position A des vorderen Abschlusses des Fahrzeugs 10 von der Position D des hinteren Abschlusses. Aus diesen Abständen werden bestimmte Verhältnisse ermittelt, aus denen sich ergibt, ob die Positionen B und C tatsächlich mit hoher Wahrscheinlichkeit zu Rädern 9 und 11 des Fahrzeugs 10 gehören.

Bei dem erfindungsgemäßen Verfahren wird eines oder mehrere der folgenden Verhältnisse bestimmt: a/l; c/l; a/b; c/b; b/l. Für diese Verhältnisse sind in der Prüfeinrichtung 13 entsprechende Sollbereiche für die zugeordneten Verhältnisse eines Referenzfahrzeugs gespeichert. Die Prüfeinrichtung 13 bestimmt, welche Verhältnisse innerhalb des Sollbereichs liegen. Liegt ein Verhältnis oder liegen mehrere Verhältnisse außerhalb des Sollbereichs, wird das Konfidenzmaß verringert.

Nach Abschluss der Auswertung werden die ermittelten Positionsdaten für die Positionen B und C der Räder 9 und 11 des Fahrzeugs 10 zusammen mit dem ermittelten Konfidenzmaß an die Steuereinrichtung 4 übertragen. Für die weitere Behandlung der Räder 9, 11 des Fahrzeugs 10 ermittelt die Steuereinrichtung 4, ob das Konfidenzmaß größer oder gleich einem vorab definierten Konfidenzgrenzwert ist oder ob das ermittelte Konfidenzmaß kleiner als dieser Konfidenzgrenzwert ist.

Wenn das ermittelte Konfidenzmaß größer oder gleich dem Konfidenzgrenzwert ist, werden im Folgenden die Räder 9 und 11 in einem ersten Modus bei den den Positionsdaten zugeordneten Positionen B, C gereinigt. Dieser erste Modus umfasst eine an sich bekannte Reinigung der Räder 9, 11 des Fahrzeugs 10.

Hierfür wird beispielsweise das vordere Portal 2 in Längsrichtung des Fahrzeugs 10 zurückgefahren. Dabei werden die Räder 9 und 11 mittels der Radbehandlungseinrichtung 8 mit Waschflüssigkeit und/oder Schaum beaufschlagt. Gegebenenfalls kann das vordere Portal 2 einmal zur Vorderseite des Fahrzeugs 10 zurückfahren und anschließend wieder zur Heckseite des Fahrzeugs 10 bewegt werden. Anschließend wird, gesteuert von der Steuereinrichtung 4, das hintere Portal 3 in Längsrichtung des Fahrzeugs 10 bewegt und die Räder 11 und 9 werden unter Berücksichtigung der ermittelten Positionsdaten für die Positionen B, C für die Positionen der Räder 11 und 9 mittels der Radwaschrichtung 5 mechanisch gereinigt. Die Radreinigung kann auf verschiedene Weisen erfolgen und ist an sich bekannt.

Wenn das ermittelte Konfidenzmaß hingegen kleiner als der Konfidenzgrenzwert ist, wird bei einer ersten Ausgestaltung des Verfahrens von einer Behandlung der Räder 9 und 11 des Fahrzeugs 10 abgesehen. Die Räder 9 und 11 werden insbesondere nicht gereinigt. Die restliche Karosserie des Fahrzeugs 10 kann auf an sich bekannte Weise gereinigt werden. Gleichzeitig wird über die Anzeigevorrichtung 15 ein Hinweis ausgegeben, dass die Radwäsche zur Sicherheit deaktiviert wurde.

Bei einer anderen Ausgestaltung des Verfahrens wird die Behandlung der Räder 9, 11 des Fahrzeugs 10 in einem zweiten Modus bei den den Positionsdaten zugeordneten Positionen B, C durchgeführt, wenn das ermittelte Konfidenzmaß kleiner als der Konfidenzgrenzwert ist. In diesem zweiten Modus werden die Räder 9, 11 nicht mechanisch gereinigt, sondern berührungslos gereinigt, beispielsweise durch einen Hochdruckstrahl mit Waschflüssigkeit, welcher von der Radbehandlungseinrichtung 8 oder der Radwascheinrichtung 5 auf die Räder 11, 9 gerichtet werden kann. Selbst wenn in diesem Fall die Position eines Rades inkorrekt bestimmt worden ist, kann in dem zweiten Modus das Risiko von Beschädigungen des Fahrzeugs 10 verringert bzw. ausgeschlossen werden. Auch bei der Behandlung der Räder 9, 11 in dem zweiten Modus wird von der Anzeigevorrichtung 15 ein entsprechender Hinweis ausgegeben, dass die Radwäsche zur Sicherheit ohne Bürsten durchgeführt wird.

Bei einem weiteren Ausführungsbeispiel des erfindungsgemäßen Verfahrens und der erfindungsgemäßen Fahrzeugwaschanlage 1 sind in dem Speicher der Prüfeinrichtung 11 keine geometrischen Parameter eines Referenzfahrzeugs gespeichert, sondern ein Mindestwert für den Abstand der Mittelpunkte der Räder 9, 11 und ein Bereich für eine erfasste Sehne des Kreises eines Fahrzeugrades 9, 11 in Höhe der unteren Lichtschranke der Sensoreinrichtung 6. Als Mindestabstand für die Mittelpunkte der Räder 9, 11 kann beispielsweise der Wert 1700 mm gespeichert sein. Wenn die unterste Lichtschranke der Sensoreinrichtung 6 in einer Höhe von 80 mm montiert ist, ist für den Bereich für eine horizontale Sehne eines Rades 9, 11 des Fahrzeugs 10 ein Bereich von 400 mm bis 600 mm gespeichert.

Alternativ kann auch ein Mindestwert für den freien Abstand zwischen zwei Rädern 9, 11 und ein Bereich für eine erfasste Sehne des Kreises eines Fahrzeugrades 9, 11 jeweils in Höhe der unteren Lichtschranke der Sensoreinrichtung 6 gespeichert sein. Für den Mindestwert des freien Abstands ist bei einem Ausführungsbeispiel ein Wert von 1400 mm gespeichert und für den Bereich der ermittelten horizontalen Sehne jeden Rades in einer Höhe von 80 mm ein Bereich von 400 mm bis 600 mm gespeichert.

Bei der Durchführung des Verfahrens wird dann mittels der Sensoreinrichtung 6 die Länge der Sehne des Kreises der Fahrzeugräder 11 und 9 erfasst, indem die Signale der untersten Lichtschranke der Sensoreinrichtung 6 in Abhängigkeit von der Position der Sensoreinrichtung 6 relativ zu dem Fahrzeug 10 betrachtet werden. Zunächst wird mittels der untersten Lichtschranke ein Signal erfasst, da die Lichtschranke nicht unterbrochen ist. Im Bereich des vorderen Rades 11 wird die Lichtschranke unterbrochen, anschließend werden in kleinen Abschnitten gegebenenfalls wieder Signale detektiert, wenn die Lichtschranke durch Felgenöffnungen durchtreten kann. Nachdem das vordere Rad 11 die Lichtschranke der Sensoreinrichtung 6 passiert hat, wird über einen längeren Abschnitt wieder ein Signal der Lichtschranke erfasst. Auf diese Weise kann die Länge der Sehne des vorderen Rades 11 bestimmt werden. Auf die gleiche Weise wird die Sehne des hinteren Rades 9 erfasst.

Wenn sich keine weiteren Unterbrechungen der Lichtschranke außerhalb der auf diese Weise ermittelten Bereiche für die Räder 11 und 9 ergeben, und wenn der Abstand der Mittelpunkte der ermittelten Sehnen, d. h. auch der jeweilige Mittelpunkt der Räder 11 und 9, größer als 1700 mm sind und die Längen der Sehnen in einem Bereich von 400 mm bis 600 mm liegen, liegt das Konfidenzmaß oberhalb des Konfidenzgrenzwerts. In diesem Fall kann nämlich mit großer Sicherheit davon ausgegangen werden, dass die Positionen der Räder 11 und 9 korrekt bestimmt worden sind.

Das Fahrzeug 10 wird in diesem Fall über eine Längserstreckung von zumindest 2300 mm, insbesondere jedoch über seine gesamte Längserstreckung gescannt, bevor eine Behandlung der Räder des Fahrzeugs begonnen wird.

Wenn hingegen z. B. aufgrund des Störelements 14 Bereiche ermittelt werden, in denen die unterste Lichtschranke der Sensoreinrichtung 6 unterbrochen ist, bei denen die vorstehend genannten Bedingungen jedoch nicht erfüllt sind, ist das Konfidenzmaß unterhalb des Konfidenzgrenzwerts. In diesem Fall kann davon ausgegangen werden, dass mit hoher Wahrscheinlichkeit, die Positionen der Räder inkorrekt bestimmt worden sind.

Das Verfahren wird anschließend weiter in Abhängigkeit davon durchgeführt, ob das Konfidenzmaß größer oder gleich dem vorab definierten Konfidenzgrenzwert ist oder ob das ermittelte Konfidenzmaß kleiner als dieser Konfidenzgrenzwert ist, wie es vorstehend beschrieben wurde.

Bei einem weiteren Ausführungsbeispiel der Fahrzeugwaschanlage 1 und des erfindungsgemäßen Verfahrens wird anstatt einer Doppelportalanlage eine Portalwaschanlage mit nur einem Portal verwendet. In diesem Fall umfasst das Portal sowohl die Sensoreinrichtung 6, die Wegerfassungseinrichtung 7 und die Radbehandlungseinrichtung 8 als auch die Radwascheinrichtung 5. Das Verfahren wird in diesem Fall wie folgt durchgeführt:

Das Portal der Fahrzeugwaschanlage 1 wird in einem ersten Hinlauf in Längsrichtung des Fahrzeugs 10 an diesem vorbeigeführt, und zwar über die gesamte Längserstreckung des Fahrzeugs 10. Dabei wird wie vorstehend beschrieben mittels der Sensoreinrichtung 6 das Fahrzeug 10 so gescannt, dass Messdaten erfasst werden, anhand derer Positionsdaten der Positionen B, C der Räder 11, 9 des Fahrzeugs 10 ermittelt werden können. Gleichzeitig wird in diesem ersten Hinlauf auf an sich bekannte Weise ein Reinigungsschaum auf die Karosserie des Fahrzeugs 10 aufgebracht. Nach dem ersten Hinlauf werden die Messdaten der Sensoreinrichtung 6 mittels der Positionsbestimmungseinrichtung 12 ausgewertet. Als Ergebnis dieser Auswertung ergeben sich Positionsdaten für die Positionen der Räder 9, 11 des Fahrzeugs 10, d. h. die Position der Mittelpunkte der Räder 9, 11 in Längsrichtung des Fahrzeugs 10 und der jeweilige Durchmesser der Räder 9, 11. Anschließend wird wie vorstehend beschrieben mittels der Prüfeinrichtung 13 das Konfidenzmaß bestimmt. Die Steuereinrichtung 4 ermittelt dann, ob das Konfidenzmaß größer oder gleich einem vorab definierten Konfidenzgrenzwert ist oder ob das ermittelte Konfidenzmaß kleiner als dieser Konfidenzgrenzwert ist.

In einem ersten Rücklauf des Portals werden dann die Räder 9 und 11 mittels der Radbehandlungseinrichtung 8 mit Waschflüssigkeit und/oder Schaum beaufschlagt. Die Waschflüssigkeit und/oder der Schaum können gegebenenfalls auch mittels der Radwascheinrichtung 5 mechanisch einmassiert werden. Das Beaufschlagen mit Waschflüssigkeit und/oder Schaum und das Einmassieren derselben mittels der Radwascheinrichtung 5 erfolgt allerdings nur in dem ersten Modus, d. h. wenn das Konfidenzmaß größer oder gleich dem vorab definierten Konfidenzgrenzwert ist.

In einem zweiten Hinlauf erfolgt daraufhin eine an sich bekannte Hochdruckreinigung der Karosserie des Fahrzeugs 10 sowie eine mechanische Reinigung der Räder 11 und 9 des Fahrzeugs 10 mittels der Radwascheinrichtung 5 bei den ermittelten Positionsdaten für die Positionen B, C für die Positionen der Räder 11 und 9. Auch diese Reinigung mittels der Radwascheinrichtung 5 erfolgt nur in dem ersten Modus.

In dem zweiten Modus wird in dem ersten Rücklauf bei einer ersten Alternative direkt die an sich bekannte Hochdruckreinigung der Karosserie des Fahrzeugs 10 durchgeführt und es ist kein zweiter Hinlauf mehr erforderlich. Bei einer zweiten Alternative erfolgt im zweiten Modus beim ersten Rücklauf die berührungslose Reinigung bei den ermittelten Positionsdaten für die Positionen B, C für die Positionen der Räder 11 und 9. Gleichzeitig erfolgt die an sich bekannte Hochdruckreinigung der Karosserie des Fahrzeugs 10, so dass auch in diesem Fall kein zweiter Hinlauf erforderlich ist.

Gemäß einem noch weiteren Ausführungsbeispiel wird auch bei der Fahrzeugwaschanlage 1 mit nur einem Portal zunächst das Fahrzeug 10 vollständig mittels der Sensoreinrichtung 6 gescannt, ohne dass eine Reinigungsflüssigkeit oder dergleichen aufgebracht wird. Anschließend erfolgt die Fahrzeugreinigung und die Radwäsche in dem ersten oder dem zweiten Modus, wie vorstehend beschrieben.

Ein noch weiteres Ausführungsbeispiel betrifft eine Fahrzeugwaschanlage 1, die als Waschstraße ausgebildet ist. In diesem Fall ist die Sensoreinrichtung 6 zu Beginn der Waschstraße angeordnet. Das Fahrzeug 10 wird in diesem Fall an der Sensoreinrichtung 6 vorbeigeführt, so dass die Position A des vorderen Abschlusses die Positionen B und C für die Räder 11 und 9 des Fahrzeugs 10 und die Position D des hinteren Abschlusses des Fahrzeugs 10 ermittelt werden können, wie es vorstehend für eine andere Relativbewegung der Sensoreinrichtung 6 zu dem Fahrzeug 10 beschrieben worden ist. Bei der Waschstraße sind die Radbehandlungseinrichtung 8 und die Radwascheinrichtung 5 in Längsrichtung jedoch mindestens die maximal zulässige Länge eines Fahrzeugs 10 für die Waschstraße von der Sensoreinrichtung 6 entfernt. Auf diese Weise wird sichergestellt, dass das Fahrzeug 10 zunächst in seiner gesamten Längserstreckung mittels der Sensoreinrichtung 6 gescannt wird, bevor eine Behandlung der Räder 11, 9 des Fahrzeugs 10 begonnen wird.

**Bezugszeichenliste**

1     Fahrzeugwaschanlage
2     vorderes Portal
3     hinteres Portal
4     Steuereinrichtung
5     Radwascheinrichtung
6     Sensoreinrichtung
7     Wegerfassungseinrichtung
8     Radbehandlungseinrichtung
9     hinteres Rad
10     Fahrzeug
11     vorderes Rad
12     Positionsbestimmungseinrichtung
13     Prüfeinrichtung
14     Störelement
15     Anzeigevorrichtung

**Patentansprüche**

1. Verfahren zum Betrieb einer Fahrzeugwaschanlage (1), bei dem

    ein Fahrzeug (10) in Längsrichtung mittels einer Sensoreinrichtung (6) gescannt wird, wobei Messdaten erfasst werden,
    anhand einer Auswertung der Messdaten Positionsdaten für die Positionen (B, C) von Rädern (11, 9) des Fahrzeugs (10) ermittelt werden,
    **dadurch gekennzeichnet, dass**
    die ermittelten Positionsdaten der Positionen (B, C) der Räder (11, 9) des Fahrzeugs (10) einer Konfidenzprüfung unterzogen werden, wobei ein Konfidenzmaß ermittelt wird,
    wenn das ermittelte Konfidenzmaß größer oder gleich einem Konfidenzgrenzwert ist, eine Behandlung der Räder (11, 9) des Fahrzeugs (10) in einem ersten Modus bei den den Positionsdaten zugeordneten Positionen (B, C) durchgeführt wird, und,
    wenn das ermittelte Konfidenzmaß kleiner als der Konfidenzgrenzwert ist, eine Behandlung der Räder (11, 9) des Fahrzeugs (10) nicht oder in einem zweiten Modus bei den den Positionsdaten zugeordneten Positionen (B, C) durchgeführt wird.

2. Verfahren nach Anspruch 1, **dadurch gekennzeichnet, dass** das Fahrzeug (10) mittels der Sensoreinrichtung (6) in einer Längserstreckung von zumindest 1700 mm gescannt wird, bevor eine Behandlung der Räder (11, 9) des Fahrzeugs (10) begonnen wird.

3. Verfahren nach Anspruch 1 oder 2, **dadurch gekennzeichnet, dass** das Fahrzeug (10) im Wesentlichen in seiner gesamten Längserstreckung mittels der Sensoreinrichtung (6) gescannt wird, bevor eine Behandlung der Räder (11, 9) des Fahrzeugs (10) begonnen wird.

4. Verfahren nach einem der vorhergehenden Ansprüche, **dadurch gekennzeichnet, dass** das ermittelte Konfidenzmaß kleiner ist, wenn bei der Auswertung der Messdaten ermittelt wurde, dass das Fahrzeug (10) mehr als zwei Achsen und/oder mehr als zwei Räder (11, 9) auf einer Fahrzeugseite aufweist.

5. Verfahren nach einem der vorhergehenden Ansprüche, **dadurch gekennzeichnet, dass** das ermittelte Konfidenzmaß größer oder gleich dem Konfidenzgrenzwert ist, wenn anhand der Auswertung der Messdaten Positionsdaten für die Positionen (B, C) von zwei Rädern (11, 9) ermittelt wurden, nach denen die Mittelpunkte der Räder einen Abstand von mehr als 1700 mm besitzen und die ermittelte Sehne jeden Rades (11, 9) in einer Höhe von 80 mm in einem Bereich von 400 mm bis 600 mm liegt.

6. Verfahren nach einem der vorhergehenden Ansprüche, **dadurch gekennzeichnet,**

    **dass** für ein Referenzfahrzeug Sollbereiche für geometrische Parameter für Positionen eines vorderen Referenzrades und eines hinteren Referenzrades relativ zu der Karosserie des Referenzfahrzeugs definiert sind,
    **dass** anhand einer Auswertung der Messdaten die geometrischen Parameter für das Fahrzeug (10) ermittelt werden und bestimmt wird, ob die ermittelten geometrischen Parameter innerhalb der definierten Sollbereiche liegen, und
    **dass** das Konfidenzmaß kleiner ist, wenn die ermittelten geometrischen Parameter außerhalb der definierten Sollbereiche liegen.

7. Verfahren nach einem der vorhergehenden Ansprüche, **dadurch gekennzeichnet, dass** bei der Behandlung der Räder (11, 9) in dem ersten Modus die Räder (11, 9) mittels Bürsten mechanisch gereinigt werden und/oder in dem zweiten Modus die Räder (11, 9) berührungslos gereinigt werden.

8. Verfahren nach einem der vorhergehenden Ansprüche, **dadurch gekennzeichnet, dass** zum Reinigen des Fahrzeugs (10) ein Portal in einem ersten Hinlauf das ruhende Fahrzeug (10) in Längsrichtung mittels der Sensoreinrichtung (6) scannt und ein Reinigungsschaum auf eine Karosserie des Fahrzeugs (10) aufgebracht wird, in einem ersten Rücklauf in dem ersten Modus eine Reinigungsflüssigkeit bei den ermittelten Positionen auf die Räder (11, 9) aufgebracht wird und in einem zweiten Hinlauf eine Hochdruckreinigung der Karosserie und eine mechanische Reinigung der Räder (11, 9) durchgeführt wird.

9. Verfahren nach einem der vorhergehenden Ansprüche, **dadurch gekennzeichnet, dass** mittels einer Anzeigevorrichtung (15) ausgegeben wird, ob die Behandlung der Räder (11,9) im ersten oder im zweiten Modus erfolgt.

10. Fahrzeugwaschanlage (1) mit

einer Behandlungseinheit (5, 8) für Räder (11, 9) eines Fahrzeugs (10),
einer Sensoreinrichtung (6) zum Scannen des Fahrzeugs (10) in Längsrichtung, wobei beim Scannen Messdaten erfassbar sind, und
einer Positionsbestimmungseinrichtung (12), die mit der Sensoreinrichtung (6) gekoppelt ist und mit der anhand einer Auswertung der Messdaten Positionsdaten für die Positionen (B, C) von den Rädern (11,9) des Fahrzeugs (10) ermittelbar sind,
**gekennzeichnet durch**
eine mit der Positionsbestimmungseinrichtung (12) gekoppelten Prüfeinrichtung (13), mit der eine Konfidenzprüfung für die ermittelten Positionsdaten der Positionen (B,C) der Räder (11, 9) des Fahrzeugs (10) durchführbar ist, wobei ein Konfidenzmaß ermittelbar ist, und
eine mit der Behandlungseinheit (5, 8) gekoppelten Steuereinrichtung (4), mit welcher die Behandlungseinheit (5, 8) so ansteuerbar ist, dass eine Behandlung der Räder (11, 9) des Fahrzeugs (10) bei den den Positionsdaten zugeordneten Positionen (B,C) in einem ersten Modus durchgeführt wird, wenn das ermittelte Konfidenzmaß größer oder gleich einem Konfidenzgrenzwert ist, und eine Behandlung der Räder (11, 9) des Fahrzeugs (10) nicht oder in einem zweiten Modus bei den den Positionsdaten zugeordneten Positionen (B, C) durchgeführt wird, wenn das ermittelte Konfidenzmaß kleiner als der Konfidenzgrenzwert ist.

**Claims**

1. A method for operating a vehicle washing system (1), in which

a vehicle (10) is scanned in the longitudinal direction by means of a sensor device (6), wherein measurement data are captured,
based on an analysis of the measurement data, position data for the positions (B, C) of wheels (11, 9) of the vehicle (10) are determined,
**characterized in that**
the determined position data of the positions (B, C) of the wheels (11, 9) of the vehicle (10) are subjected to a confidence check, and a confidence measure is determined,
if the determined confidence measure is greater than or equal to a confidence threshold value, a treatment of the wheels (11, 9) of the vehicle (10) is carried out in a first mode at the positions (B, C) allocated to the position data, and
if the determined confidence measure is smaller than the confidence threshold value, a treatment of the wheels (11, 9) of the vehicle (10) is not carried out or is carried out in a second mode at the positions (B, C) allocated to the position data.

2. The method according to claim 1, **characterized in that** the vehicle (10) is scanned by means of the sensor device (6) along a longitudinal extension of at least 1700 mm before a treatment of the wheels (11, 9) of the vehicle (10) is started.

3. The method according to claim 1 or 2, **characterized in that** the vehicle (10) is scanned by means of the sensor device (6) substantially along its entire longitudinal extension before a treatment of the wheels (11, 9) of the vehicle (10) is started.

4. The method according to any one of the preceding claims, **characterized in that** the determined confidence measure is smaller if it was determined during the analysis of the measurement data that the vehicle (10) has more than two axles and/or more than two wheels (11, 9) on one side of the vehicle.

5. The method according to any one of the preceding claims, **characterized in that** the determined confidence measure is greater than or equal to the confidence threshold value if, based on the analysis of the measurement data, position data for the positions (B, C) of two wheels (11, 9) were determined, according to which the centers of the wheels are at a distance of more than 1700 mm from each other and the determined chord of each wheel (11, 9) at a height of 80 mm is within a range from 400 mm to 600 mm.

6. The method according to any one of the preceding claims, **characterized in that**
for a reference vehicle, target ranges for geometric parameters for positions of a front reference wheel and a rear reference wheel relative to the body shell of the reference vehicle are defined,
**in that**, based on an analysis of the measurement data, the geometric parameters for the vehicle (10) are established, and that it is determined whether the established geometric parameters are within the defined target ranges, and
**in that** the confidence measure is smaller if the established geometric parameters are outside of the defined target ranges.

7. The method according to any one of the preceding claims, **characterized in that** during the treatment of the wheels (11, 9) in the first mode, the wheels (11, 9) are mechanically cleaned by means of brushes and/or in the second mode, the wheels (11, 9) are subjected to touchless cleaning.

8. The method according to any one of the preceding claims, **characterized in that** in order to clean the vehicle (10), a gantry scans the stopped vehicle (10) in a first forward pass in the longitudinal direction by means of the sensor device (6), and a cleaning foam is applied to a body shell of the vehicle (10), a cleaning fluid is applied to the wheels (11, 9) in a first return pass in the first mode at the determined positions, and high-pressure cleaning of the body shell and mechanical cleaning of the wheels (11, 9) are carried out in a second forward pass.

9. The method according to any one of the preceding claims, **characterized in that** a display device (15) indicates whether the treatment of the wheels (11,9) is carried out in the first or in the second mode.

10. A vehicle washing system (1), comprising
a treatment unit (5, 8) for wheels (11, 9) of a vehicle (10),
a sensor device (6) for scanning the vehicle (10) in the longitudinal direction, wherein measurement data can be captured during scanning, and
a position determination device (12), which is coupled to the sensor device (6) and by means of which, based on an analysis of the measurement data, position data for the positions (B, C) of the wheels (11, 9) of the vehicle (10) can be determined,
**characterized by**
a checking device (13) which is coupled to the position determination device (12) and by means of which a confidence check for the determined position data of the positions (B,C) of the wheels (11, 9) of the vehicle (10) can be carried out and a confidence measure can be determined, and
a control unit (4) which is coupled to the treatment unit (5, 8) and by means of which the treatment unit (5, 8) can be controlled in such a way that a treatment of the wheels (11, 9) of the vehicle (10) is carried out in a first mode at the positions (B,C) allocated to the position data if the determined confidence measure is greater than or equal to a confidence threshold value, and a treatment of the wheels (11, 9) of the vehicle (10) is not carried out or is carried out in a second mode at the positions (B, C) allocated to the position data if the determined confidence measure is smaller than the confidence threshold value.

## Revendications

1. Procédé de fonctionnement d'une installation de lavage de véhicules (1), chez lequel

    un véhicule 10) est balayé dans le sens longitudinal au moyen d'un dispositif capteur (6), où les données de mesure sont saisies,
    des données de position sont déterminées pour les positions (B, C) des roues (11, 9) du véhicule (10) à l'aide d'une exploitation des données de mesures,
    **caractérisé en ce que**
    les données de position déterminées des positions (B, C) des roues (11, 9) du véhicule (10) sont soumises à un contrôle de confiance, où une mesure de confiance est déterminée,
    lorsque la mesure de confiance déterminée est supérieure ou égale à une valeur de seuil de confiance, un traitement des roues (11, 9) du véhicule (10) est effectué dans un premier mode pour les positions (B, C) correspondant aux données de positions, et
    lorsque la mesure de confiance déterminée est inférieure à la valeur de seuil de confiance, un traitement des roues (11, 9) du véhicule (10) n'est pas effectué ou est effectué dans un deuxième mode pour les positions (B, C) correspondant aux données de positions.

2. Procédé selon la revendication 1, **caractérisé en ce que** le véhicule (10) est balayé au moyen du dispositif capteur (6) dans une extension longitudinale d'au moins 1700 mm avant qu'un traitement des roues (11, 9) du véhicule (10) ne soit commencé.

3. Procédé selon la revendication 1 ou la revendication 2, **caractérisé en ce que** le véhicule (10) est balayé essentiellement dans son extension longitudinale globale au moyen du dispositif capteur (6) avant qu'un traitement des roues (11, 9) du véhicule (10) ne soit commencé.

4. Procédé selon l'une des revendications précédentes, **caractérisé en ce que** la mesure de confiance déterminée est plus petite lorsqu'on détermine, lors de l'exploitation des données de mesure, que le véhicule (10) présente plus de deux axes et/ou plus de deux roues (11, 9) sur un côté du véhicule.

5. Procédé selon l'une des revendications précédentes, **caractérisé en ce que** la mesure de confiance déterminée est égale ou supérieure à la valeur de seuil de confiance lorsqu'on a pu déterminer, à l'aide de l'exploitation des données de mesure, des données de positions pour les positions (B, C) de deux roues (11, 9), selon lesquelles les centres des roues sont à une distance supérieure à 1700 mm et la corde déterminée de chaque roue (11, 9) se situe à une hauteur de 80 mm dans une plage de 400 mm à 600 mm.

6. Procédé selon l'une des revendications précédentes, **caractérisé en ce**

    **que** des plages théoriques pour des paramètres géométriques pour des positions d'une roue avant de référence et d'une roue arrière de référence sont définies par rapport à la carrosserie du véhicule de référence, pour un véhicule de référence,
    **qu'**à l'aide de l'exploitation des données de mesure, les paramètres géométriques sont déterminés pour le véhicule (10) et on détermine si les paramètres géométriques se situent dans les plages théoriques définies, et
    **que** la mesure de confiance est plus petite lorsque les paramètres géométriques déterminés se situent en dehors des plages théoriques définies.

7. Procédé selon l'une des revendications précédentes, **caractérisé en ce que**, dans le traitement des roues (11, 9) dans le premier mode, les roues (11, 9) sont nettoyées mécaniquement au moyen de brosses et/ou dans le deuxième mode, les roues (11, 9) sont nettoyées sans contact.

8. Procédé selon l'une des revendications précédentes, **caractérisé en ce que**, pour le nettoyage du véhicule (10), un portique balaye dans un premier parcours vers l'avant le véhicule (10) au repos dans le sens longitudinal au moyen du dispositif capteur (6) et une mousse de nettoyage est apportée sur une carrosserie du véhicule (10), un liquide de nettoyage est appliqué sur les roues (11, 9) pour les positions déterminées dans un premier parcours de retour dans le premier mode, et un nettoyage à haute pression de la carrosserie et un nettoyage mécanique des roues (11, 9) sont effectués dans un second parcours vers l'avant.

9. Procédé selon l'une des revendications précédentes, **caractérisé en ce qu'**il est indiqué au moyen d'un dispositif d'affichage (15) si le traitement des roues (11, 9) a lieu dans le premier ou dans le second mode.

10. Installation de lavage de véhicules (1) dotée

    d'une unité de traitement (5, 8) pour des roues (11, 9) d'un véhicule (10),
    d'un dispositif capteur (6) permettant le balayage du véhicule (10) dans le sens longitudinal, où des données de mesure sont détectables lors du balayage, et
    d'un dispositif de détermination de position (12) qui est couplé avec le dispositif capteur (6) et avec lequel des données de position peuvent être déterminées à l'aide de l'exploitation des données de mesure pour les positions (B, C) de roues (11, 9) du véhicule (10),
    **caractérisée par**
    un dispositif de contrôle (13) couplé avec le dispositif de détermination de positions (12) avec lequel un contrôle de confiance peut être effectué pour les données de position déterminées des positions (B, C) des roues (11, 9) du véhicule (10), une mesure de confiance pouvant être déterminée, et
    un dispositif de commande (4) couplé à l'unité de traitement (5, 8), avec lequel l'unité de traitement (5, 8) peut être commandée de manière à ce qu'un traitement des roues (11, 9) du véhicule (10) soit effectué dans un premier mode pour les positions (B, C) correspondant aux données de positions, lorsque la mesure de confiance déterminée est égale ou supérieure à une valeur de seuil de confiance, et un traitement des roues (11, 9) du véhicule (10) n'est pas effectué ou est effectué dans un second mode pour les positions (B, C) correspondant aux données de position lorsque la mesure de confiance déterminée est inférieure à la valeur de seuil de confiance.

Fig. 1

EP 3 544 867 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3811196 C2
- EP 0947405 B1
- EP 2571734 B1
- DE 20205050 U1
- WO 2013064574 A1
- EP 1795409 A2